# EUROPEAN PATENT APPLICATION

(11) **EP 2 497 399 A1**
(43) Date of publication of application: **12.09.2012**
(21) Application number: 10827883.9
(22) Date of filing: 28.10.2010
(51) Int. Cl.: A47J 37/06, A21B 1/00

(54) **FRYING AND BAKING MACHINE WITH IMPROVED HANDLE STRUCTURE**

(30) Priority: 04.11.2009 CN 200920314046 U
(71) Applicant: Tsann Kuen (Zhangzhou) Enterprise Co., Ltd., Fujian 363000 (CN)
(72) Inventor: KUO, Pochun, Tainan County Taiwan (CN)
(74) Representative: Lermer, Christoph
(86) International application number: PCT/CN2010/078187
(87) International publication number: WO 2011/054269

(57) **Abstract**

The present invention discloses a grilling device with an improved handle structure, comprising an upper cover, a lower cover, an upper grilling pan disposed on the lower surface of the upper cover and a lower grilling pan disposed on the upper surface of the lower cover, said upper cover is disposed on the upper grilling pan, the front end of which is a handle, the front end of said upper cover extends downward to from at least two front stop plates, a strip-shaped groove with a downward opening is set between each two adjacent front stop plates, and the rearmost front stop plate warps the outside of the front end of the upper grilling pan. In said grilling device, the at least two front stop plates formed by the downward extending of the upper cover form a two-layer or multi-layer stop wall on the open and close mechanism of the upper grilling pan and the lower grilling pan, thereby the heat generated from the working grilling device will be effectively reduced

## Description

### Field of the invention

The present invention relates to the field of grilling device, especially relates to a grilling device with an improved handle structure.

### Background of the invention

The grilling device usually comprises an upper grilling pan and a lower grilling pan with pin-jointed rear portions, the food is put between the two grilling pans when it is grilled, the upper and lower grilling pan will heat the food simultaneously. After the grilling device finishes its cooking operation, the user needs to take the food out of the grilling device in time for the next cooking operation, however, because the temperature of the grilling device is relatively high at that moment, so if the user directly touch the handle which is adjacent the open and close mechanism of the upper and lower grilling pan, he will be scalded definitely, in order to avoid the scald injury, the existing grilling device usually design the handle with a long arm, so the hand-hold portion will far away from the open and close mechanism of the grilling device. However, the grilling device will occupy a large space by applying this kind of structure, so the storage cost and the transportation cost will be relatively high.

### Summary of the invention

The present invention provides a grilling device with an improved handle structure, it will solve the above problems of the conventional technique. In the present grilling device, there are at least two front stop plates formed on the upper cover to form a two-layer or multi-layer stop wall, thereby the heat generated from the working grilling device will be effectively reduced, further the air convection between the stop plates will be dispersed timely.

The technical solution applied by the present invention is:

A grilling device with an improved handle structure, comprising an upper cover, a lower cover, an upper grilling pan disposed on the lower surface of the upper cover and a lower grilling pan disposed on the upper surface of the lower cover, the rear side edges of said upper grilling pan and said lower grilling pan are rotatablely connected, the front portion of said upper grilling pan bends downward to form a circular-arc shape, the front portion of the lower grilling pan forms a shape adapted to said circular-arc shape and folded with the front portion of said upper grilling pan, wherein said upper cover is disposed on the upper grilling pan, the front end of which is a handle, the front end of said upper cover extends downward to from at least two front stop plates, a strip-shaped groove with a downward opening is set between each two adjacent front stop plates, and the rearmost front stop plate warps the outside of the front end of the upper grilling pan.

In a preferred embodiment, said handle is disposed along the front side edge of said upper grilling pan.

In a preferred embodiment, said strip-shaped groove is disposed along the front side edge of said upper grilling pan.

In a preferred embodiment, the width of said strip-shaped groove can be adjusted according to the size of the grilling device or other factors, the width is usually ranged from 0.5cm to 5cm.

In a preferred embodiment, said upper cover extends downward to from two front stop plates.

In a preferred embodiment, the lower ends of the two front stop plates are level with each other, or the lower end of the foremost front stop plate is slightly lower than the lower end of the rearmost front stop plate.

Further, the upper cover is made of bakelite with high heat-resistance.

According to the description of the structure of the present invention, the present invention has such advantages compared to the conventional technique:

firstly, the upper cover extend downward to form at least two front stop plates, so a two-layer or a multi-layer stop wall will be formed on the open and close mechanism of the upper and lower grilling pans, thereby the heat generated from the working grilling device will be effectively reduced, moreover, the air convection between the stop plates will be dispersed timely, the problems of the scald injury will be solved, the operation is more convenient and safe;

secondly, since the handle is disposed along the front side edge of the upper grilling pan, so the grilling device will occupy less space, the storage cost and the transportation cost will be reduced.

### Brief description of the drawings

Fig.1 is the perspective structural view of the present invention.

Fig.2 is the bottom view of the upper grilling pan with an upper cover of the present invention.

Fig.3 is the sectional view of the upper grilling pan with an upper cover of the present invention.

Fig.4 is the sectional view of the present invention.

### Detailed description of the embodiments

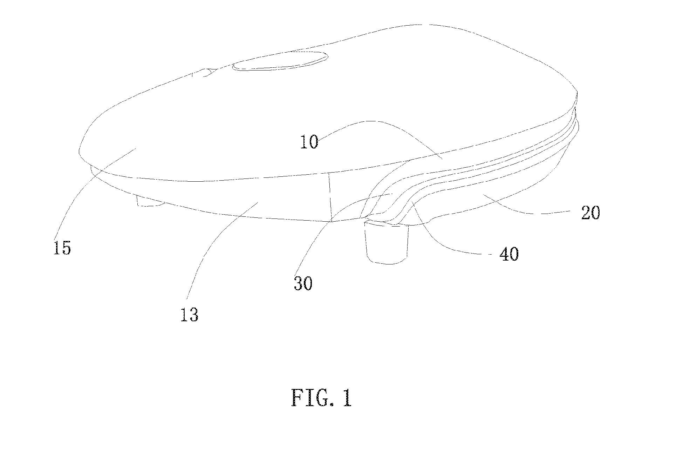

The present invention will become apparent with the reference to the fig.1 to fig.4.

Please refer to fig.1, the grilling device with an improved handle structure comprises an upper cover 10 made of bakelite, a lower cover 20, an upper grilling pan 30 disposed on the lower surface of the upper cover 10 and a lower grilling pan 40 disposed on the upper surface of the lower cover 20, the rear side edges of the upper grilling pan 30 and the lower grilling pan 40 are pin-jointed with a revolving shaft 30. The front portion of the upper grilling pan 30 bends downward to form a circular-arc shape ring 31, the front portion of the lower grilling pan 40 forms a shape adapted to the circular-arc shape.

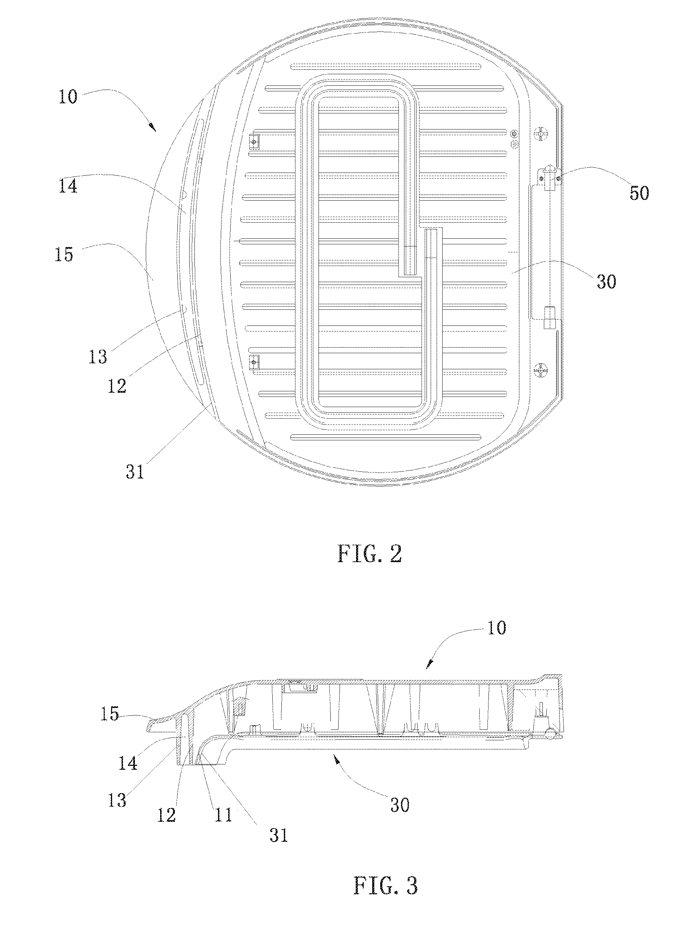

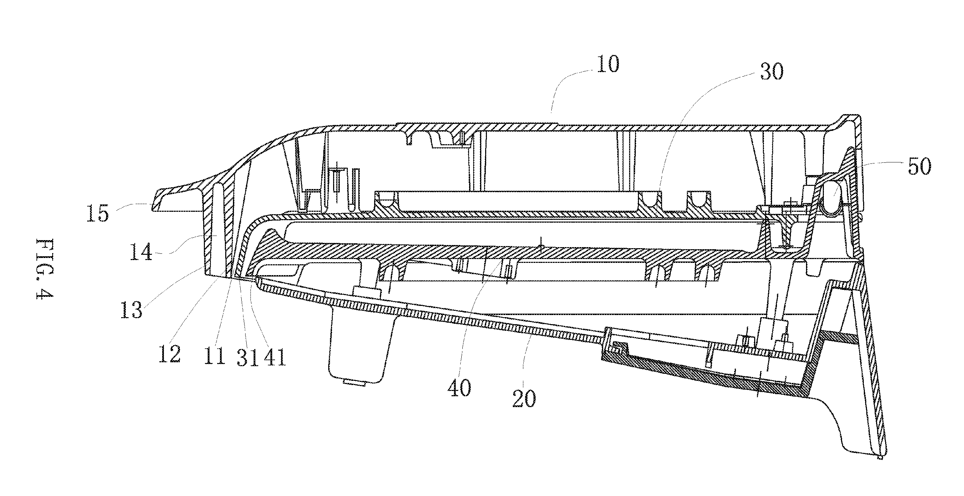

Please refer to fig.2 and fig.3, the upper cover 10 is disposed on the upper grilling pan 30, the front end of the upper cover 10 forms a handle 15 disposed along the front side edge of said upper grilling pan 30, the front end of the upper cover 10 extends downward to form two front stop plates 12 and 13, a strip-shaped groove 14 with a downward opening is disposed along the front side edge of the upper grilling plate 30 and between the two front stop plates 12 and 13, the width of the strip-shaped groove 14 is ranged from 0.5cm to 1cm. The lower ends of the two front stop plates 12 and 13 are level with each other, and the rearmost front stop plate 12 warps the outside of the ring 31 of the front end of the upper grilling pan 30. The ring 31 is disposed with a gap 11 about the front stop plate 12.
Refer to the fig.4, when the grilling device with an improved handle structure is in use, the food to grill is put between the upper grilling pan 30 and the lower grilling pan 40, the ring 31 of the front end of the upper grilling pan 30 wraps the outside of the lower grilling pan 40 with a gap. The two stop plates 12 and 13 of the upper cover 10 are disposed outside the heating area. For the gap 11 disposed between the stop plate 12 and the ring 31, especially for the strip-shaped groove 14 disposed between the stop plate 12 and 13, the high-temperature of the heating area will not be transferred to the stop plate 13. So that the hand will not be hurt by touching the stop plate 13when handing the handle 15 to open the grilling device.

Although the present invention has been described with reference to the preferred embodiments thereof for carrying out the invention, it is apparent to those skilled in the art that a variety of modifications and changes may be made without departing from the scope of the present invention which is intended to be defined by the appended claims.

### Industrial applicability

The present invention provides with a grilling device with an improved handle structure, the upper cover of which extend downward to form at least two front stop plates, so a two-layer or a multi-layer stop wall will be formed on the open and close mechanism of the upper and lower grilling pans, thereby the heat generated from the working grilling device will be effectively reduced, improving the safety when in use.

## Claims

1. A grilling device with an improved handle structure, comprising an upper cover, a lower cover, an upper grilling pan disposed on the lower surface of the upper cover and a lower grilling pan disposed on the upper surface of the lower cover, the rear side edges of said upper grilling pan and said lower grilling pan are rotatablely connected, the front portion of said upper grilling pan bends downward to form a circular-arc shape, the front portion of the lower grilling pan forms a shape adapted to said circular-arc shape and folded with the front portion of said upper grilling pan, wherein said upper cover is disposed on the upper grilling pan, the front end of which is a handle, the front end of said upper cover extends downward to from at least two front stop plates, a strip-shaped groove with a downward opening is set between each two adjacent front stop plates, and the rearmost front stop plate warps the outside of the front end of the upper grilling pan.

2. The grilling device with an improved handle structure according to claim 1, wherein said handle is disposed along the front side edge of said upper grilling pan.

3. The grilling device with an improved handle structure according to claim 2, wherein said strip-shaped groove is disposed along the front side edge of said upper grilling pan.

4. The grilling device with an improved handle structure according to claim 3, wherein the width of said strip-shaped groove is ranged from 0.5cm to 5cm.

5. The grilling device with an improved handle structure according to claim 1 or claim 2 or claim 3 or claim 4, wherein said upper cover extends downward to from two front stop plates.

6. The grilling device with an improved handle structure according to claim 5, wherein the lower ends of the two front stop plates are level with each other.

7. The grilling device with an improved handle structure according to claim 6, wherein the lower end of the foremost front stop plate is slightly lower than the lower end of the rearmost front stop plate.

8. The grilling device with an improved handle structure according to the claim 2, wherein the front portion of said upper grilling pan bends downward to form a circular-arc shape ring, which is disposed with a gap about the rearmost front stop plate.
